Europäisches Patentamt

European Patent Office

Office européen des brevets

(11) Veröffentlichungsnummer: 0 364 732
A1

## EUROPÄISCHE PATENTANMELDUNG

(21) Anmeldenummer: 89116916.1

(22) Anmeldetag: 12.09.89

(51) Int. Cl.⁵: B60B 33/02

(30) Priorität: 14.10.88 DE 3835034

(43) Veröffentlichungstag der Anmeldung:
25.04.90 Patentblatt 90/17

(84) Benannte Vertragsstaaten:
AT BE CH DE ES FR GB GR IT LI LU NL SE

(71) Anmelder: TENTE-ROLLEN GmbH & Co.
Herlinghausen 75
D-5632 Wermelskirchen 1(DE)

(72) Erfinder: Sieper, Hans Gerd, Dipl.-Ing.
Hastener Strasse 143
D-5630 Remscheid 1(DE)

(74) Vertreter: Müller, Enno et al
Rieder & Partner Corneliusstrasse 45
D-5600 Wuppertal 11(DE)

(54) Laufrolle.

(57) Die Erfindung betrifft eine Laufrolle (1), insbesondere Lenkrolle, mit einem mit einer Lauffläche (5, 30) des Laufrades (3) zusammenwirkenden Feststellelement in Form einer sich aus der Drehbewegung des Laufrades (3) selbst einziehenden Feststellbacke (6, 7) und schlägt zur Erzielung einer hohen Feststellkraft bei möglichst einfachem Aufbau vor, daß die Feststellbacke (6, 7) als zum Eingriff mit der Lauffläche (5, 30) verschwenkbar gelagertes Feststellelement ausgebildet ist und eine zu ihrer Drehachse (11, 12) exzenterartig gekrümmte Eingriffsfläche (10) besitzt.

FIG.1

EP 0 364 732 A1

## Laufrolle

Die Erfindung betrifft eine Laufrolle, insbesondere Lenkrolle, mit einem mit einer .Lauffläche des Laufrades zusammenewirkenden Feststellelement in Form einer sich aus der Drehbewegung des Rades selbst einziehenden Feststellbacke.

Zum allgemeinen Stand der Technik wird zunächst auf das DE-Gm 19 32 802 verwiesen. Bei der aus dieser Druckschrift bekannten Laufrolle ist das Feststellelement an einem Wippenteil ausgebildet und mittels einer Nockenschwinge in und außer Eingriff mit der Lauffläche bringbar. Die Bremskraft bzw. die Feststellkraft ist ganz wesentlich durch die Kraft bestimmt, mit welcher das Feststellelement auf die Lauffläche gedrückt wird. Um eine Feststellung jeweils sicher zu. erreichen, muß immer eine hohe Betätigungskraft im System gespeichert sein bzw. zur Verfügung stehen.

Darüber hinaus ist zum Stand der Technik auf das DE-Gm 19 49 047 zu verweisen. Aus dieser Druckschrift ist eine Laufrolle mit zwei Feststellbakken bekannt, die durch Federkraft in ihre Eingriffsstellung vorgespannt sind. Zwischen den Feststellbacken ist ein Betätigungshebel angeordnet, der bei Verschwenkung die Feststellbacken zur Bewegung in ihre Eingriffsstellung freigibt. Die Feststellbacken sind horizontal verschiebbar angeordnet. Nach Freigabe der Bewegung einer Feststellbacke in die Eingriffsstellung kommt diese durch die wirkende Federkraft mittels der an ihrer Unterseite ausgebildeten, an die Krümmung der Lauffläche des Laufrades angepaßten Eingriffsfläche mit dem Laufrad in Kontakt. Die Federkraft schiebt die Feststellbacke weiter vor, bis es zu einer Blockierung des Laufrades kommt, wobei gleichzei tig eine zunehmende Kraft zwischen der Feststellbacke und ihrer oberen Gleitführung als Widerlager auftritt. Dies ist im Hinblick auf eine optimale Feststellung bzw. Blockierung des Laufrades hinderlich.

Ausgehend von dem vorbeschriebenen Stand der Technik stellt sich der Erfindung die Aufgabe, eine Laufrolle, insbesondere Lenkrolle, mit einem mit einer Lauffläche des Laufrades zusammenwirkenden Feststellelement in Form einer sich aus der Drehbewegung des Rades selbst einziehenden Feststellbacke anzugeben, mit welcher bei möglichst einfachem Aufbau in gebrauchsgünstiger Weise eine geforderte hohe Feststellkraft erzielbar ist.

Diese Aufgabe ist zunächst und im wesentlichen bei der im Anspruch 1 angegebenen Erfindung gelöst.

Erfindungsgemäß ist vorgesehen, daß die Feststellbacke als zum Eingriff mit der Lauffläche verschwenkbar gelagertes Feststellelement ausgebildet ist und eine zu ihrer Drehachse exzenterartig gekrümmte Eingriffsfläche besitzt. Durch die verschwenkbar gelagerte Ausbildung des Feststellelementes ergibt sich aufgrund der Reaktionskraft bei der Feststellung eine wesentlich geringere bzw. nur unwesentliche Kraft, die der Bewegung der Feststellbacke in die Eingriffsstellung entgegenwirkt. Der Selbsteinzug ist sehr wirksam. Überraschenderweise läßt sich hierdurch der Aufbau auch vereinfachen. Eine Gleitführung, in welcher sich die Feststellbacke bewegt, ist nicht unbedingt erforderlich. In weiterer Ausgestaltung ist vorgesehen, daß die Eingriffsfläche der Feststellbakke mit einer konkav verlaufenden Innenfläche der Laufrolle zusammenwirkt. Hierzu ist vorteilhaft vorgesehen, daß die Feststellbacke insgesamt im Inneren einer Laufrolle angeordnet ist und auf die Innenfläche eines Radkörpers wirkt. Die Feststellbacke kann weiter einen Betätigungsarm besitzen, an dem ein Betätigungsstift angreift, zur Anhebung der Feststellbacke aus einer Eingriffsstellung in die Freigabestellung. Die Feststellbacke kann zunächst so gelagert sein, daß sie selbsttätig, allein aufgrund der Schwerkraft sich in die Eingriffsstellung bewegt. Darüber hinaus und bevorzugt kann die Feststellbacke durch eine Feder in ihre Eingriffsstellung vorgespannt sein. Der Betätigungsstift hat also die Feststellbacke mittels des Betätigungsarmes lediglich gegen die Schwerkraft bzw. eine Federkraft anzuheben, um die Freigabestellung zu erreichen bzw. die Feststellbacke in der Freigabestellung zu arretieren. Es ist vorteilhaft, die Feststellbacke in einer feststehenden, an der Gabel gelagerten Trägerplatte zu haltern. Dies trifft auch auf die weiter unten noch beschriebene weitere Ausführungsform zu. Auch kann die Feststellbacke unmittelbar an der Gabel gehaltert bzw. drehbar gelagert sein. Bei einer Ausführung mit zwei Feststellbacken sind die Betätigungsärme bevorzugt so angeordnet, daß sie, bei Gegenüberanordnung der Feststellbacken, sich überkreuzen, wobei sie sich nebeneinander befinden. Dagegen sind die Feststellbacken bevozugt im wesentlichen über die gesamte Breite der Innenfläche bzw. der Lauffläche (bei Außenanordnung) der Laufrolle sich erstreckend ausgebildet. Der Betätigungsstift, der mit den Betätigungsarmen der Feststellbacken zusammenwirkt, ist etwa im Bereich einer senkrechten Mittelachse der Laufrolle vertikal bewegbar bevorzugt angeordnet. Insgesamt ist es bei einer derart ausgeführten Laufrolle nicht erforderlich, eine Betätigungskraft im System zu speichern. Die Feststellung ergibt sich alleine aus der Selbsteinziehung der Feststellbakken. Bevorzugt sind gemäß einer weiteren Ausführungsform zwei für einen gegensinnigen Selbsteinzug gekoppelte Feststellbacken vorgesehen. Geeigneterweise kann die Kopplung durch ein Federelement realisiert sein. Auf der Eingrifffläche einer Feststellbacke kann eine Profilierung ausgebildet sein, die den Selbsteinzug unterstützt. Wesentlich ist, daß Bewegungsbahn, Neigung der Eingriffsfläche und Reibwert der Eingriffsfläche sowie des Laufrades für den Selbsteinzug geeignet aufeinander abgestimmt sind. Darüberhinaus kann in weiterer bevorzugter Ausgestaltung vorgesehen sein, daß eine den zunehmenden Eingriff der Feststellbacke ermöglichende Elastizität gegeben ist. Vorzugsweise durch eine entsprechende Elastizität des Laufrades. Es kann aber auch, zusätzlich oder alternativ, eine Elastizität in den Feststellbacken oder in deren Lagerung gegeben sein. Beispielsweise können die Lagerachsen gegen progressiv wirkende Federelemente auslenkbar vorgesehen sein. Die Feststellbacke ist unter Federbelastung auf die Lauffläche des Laufrades absenkbar, so daß eine lediglich auslösende Betätigung erforderlich ist. Durch die Gestaltung, insbesondere Exzentrizität bei verschwenkbarer Lagerung, der Eingriffsfläche der Feststellbacke in bezug auf die Bewegungsachse bzw. Schwenkachse der Feststellbacke, in Verbindung mit der Profilierung der Eingriffsfläche der Feststellbacke, ergibt sich eine selbsteinziehende, bremskraftverstärkende Wirkung. Bei schwenkbarer Lagerung der Feststellbacke senkt sich die Eingriffsfläche der Feststellbacke, durch eine zur Drehrichtung des Laufrades gegensinnige Schwenkbewegung der Feststellbacke, auf die Lauffläche ab. Bei Kontakt mit der Lauffläche des Laufrades versucht das Laufrad die Feststellbacke mitzuschleppen, wodurch es zu der selbsteinziehenden Wirkung der Feststellbacke kommt. Eine weitere Ausgestaltung schlägt vor, daß die Feststellbacke anschlagbegrenzt bewegbar ist. Ein Überschnappeffekt, insbesondere bei relativ weichelastischer Ausgestaltung etwa der Lauffläche, ist hierdurch vermieden. Eine besonders vorteilhafte Ausgestaltung ist gegeben bei Betätigung der Feststellbacke mittels eines Fußhebels. Die Feststellbacke wird durch die Bewegung des Fußhebels auf die Lauffläche abgesenkt. Der Fußhebel dient bei weiterer Bewegung als Anschlag für die Bewegung der Feststellbacke. Der Fußhebel tritt im spitzen Winkel auf die Lauffläche. Bei der bevorzugten Ausgestaltung von zwei Feststellbacken, die für eine gegensinnige Verschwenkung miteinander gekoppelt sind, besitzt die eine Feststellbacke bevorzugt eine Mitnehmernase, welche mit einer Eingriffsausnehmung der anderen Feststellbacke zu einem Anheben und Absenken derselben zusammenwirkt. Die Mitnehmernase ist an der fußbetätigbaren Feststellbacke ausgebildet. Die Mitnehmernase und die Eingriffsausnehmung kämmen gleichsam in Form einer Evolventenverzahnung miteinander. Im abgesenkten Zustand sind die Mitnehmernase und die Eingriffsausnehmung außer Eingriff.

Die beiden Feststellbacken sind darüber hinaus bevorzugt durch ein jeweils außerhalb ihrer Schwenkachse, bei verschwenkbarer Lagerung, angelenktes Federelement gegeneinander vorgespannt. Es können auch beispielsweise zwei Federelemente vorgesehen sein. Die Anlenkpunkte sind so gewählt, daß im angehobenen Zustand der Feststellbacken sich eine Übertotpunktstellung ergibt. Durch die Schaltbetätigung einer Feststellbacke wird dieses über den Totpunkt nach unten abgesenkt, wobei es gleichzeitig durch die mechanische Kopplung -bei der anfänglichen Bewegung- das andere Feststellelement gleichfalls absenkt. Nach Überwinden des Totpunktes sorgt das Federelement für die weitere Absenkung bis zur Auflage auf der Lauffläche. Hiernach schließt sich die Bremsverstärkung durch Selbsteinzug an. Aufgrund der zweifach vorgesehenen, gegensinnig schwenkbaren Feststellbacken ergibt sich der Selbsteinzug bei einer Bewegung in beiden möglichen Drehrichtungen des Laufrades. Das Federelement ist bevorzugt S-förmig gekrümmt ausgebildet, wobei die jeweiligen Enden des S durch rechtwinklige Krümmung in entsprechende Aufnahmen in den Feststellelementen zur Halterung einsteckbar sind. Bei einer Schwenkrolle ist bevorzugt der Feststelleingriff mit einer Schwenkverriegelung gekoppelt. Hierzu ist ein an sich bekanntes Federelement vorgesehen, das durch die nahe der Schwenkachse angeordnete Feststellbacke zum Rasteingriff in eine entsprechende Verzahnung der Schwenkachse auslösbar ist. Es ergibt sich eine Richtungsfeststellung in Festsetzungsstellung. Beide Feststellbacken sind bevorzugt auf einer Seite, außerhalb der Radmitte angeordnet. Die äußere Feststellbacke etwa in der Ein-Uhr-Stellung und die innere Feststellbacke etwa in der Einhalb-Ein-Uhr-Stellung. Die äußere Feststellbacke ist mit einem Fußhebel ausgebildet und besitzt bevorzugt darüber hinaus in gleichfalls an sich bekannter Weise einen in abgesenkter Stellung des ersten Fußhebels von oben betretbaren Lösehebel. Der Fußhebel und der Lösehebel schließen einen stumpfen Winkel miteinander ein. Alternativ hierzu sind auch andere bekannte Betätigungsarten mit der hier beschriebenen Feststelleinrichtung kombinierbar.

Nachstehend ist die Erfindung desweiteren in größerer Einzelheit mit Bezug auf die beigefügte Zeichnung, die jedoch lediglich ein Ausführungsbeispiel darstellt, beschrieben. Hierbei zeigt:

Fig. 1 eine schematische Seitenansicht, bei entfernter vorderer Trägerplatte, einer ersten Ausführungsform;

Fig. 2 den Gegenstand gemäß Fig. 1, in festgestellter Stellung;

Fig. 3 den Gegenstand gemäß Fig. 1 bzw. Fig 2, geschnitten entlang der Linie III-III in Fig. 1;

Fig. 4 den Gegenstand gemäß Fig.1 bzw.

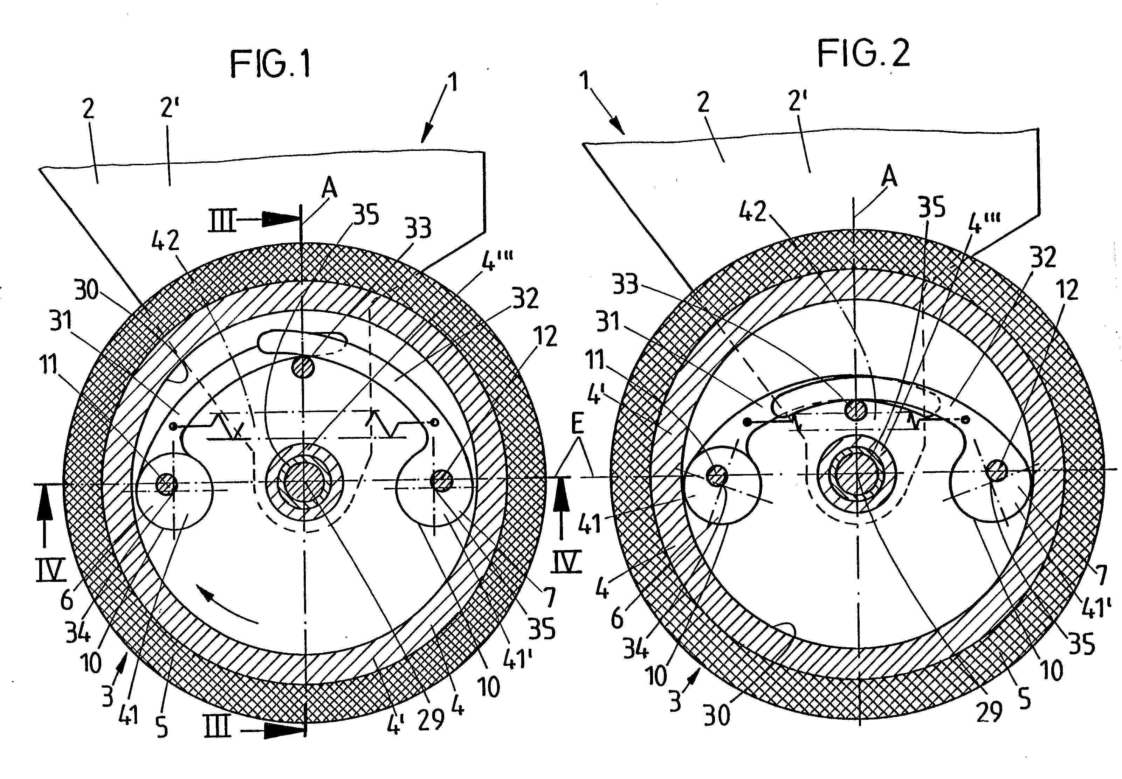

Fig. 2, geschnitten entlang der Linie IV-IV in Fig. 1;

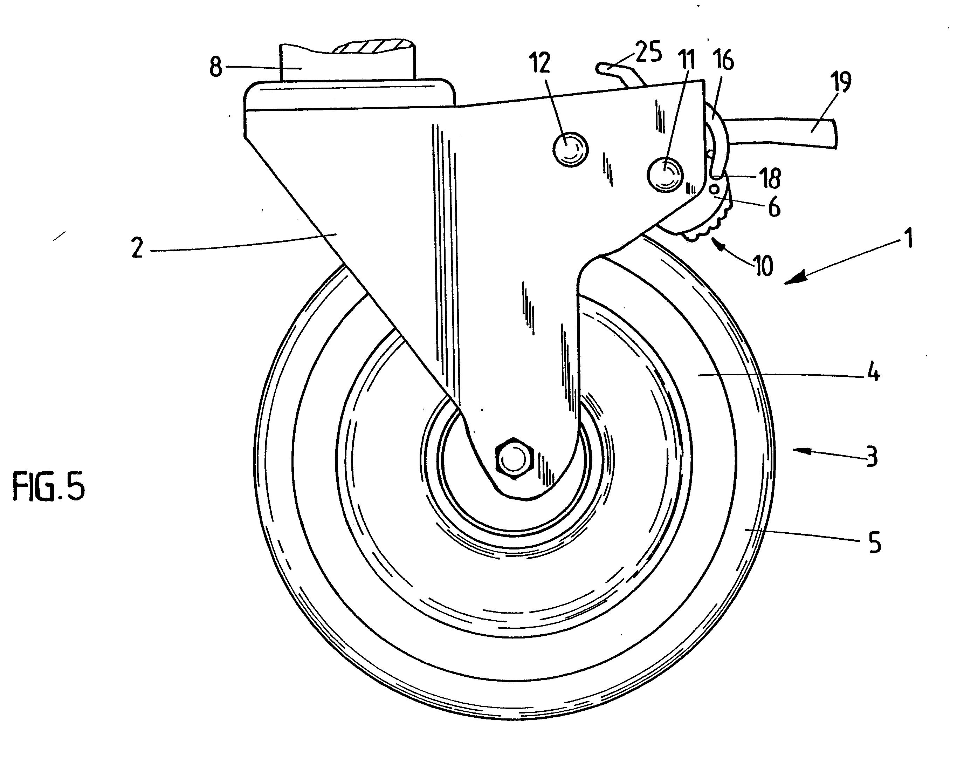

Fig. 5 eine Seitenansicht einer Laufrolle einer weiteren Ausführungsform, in nicht gestelltem Zustand;

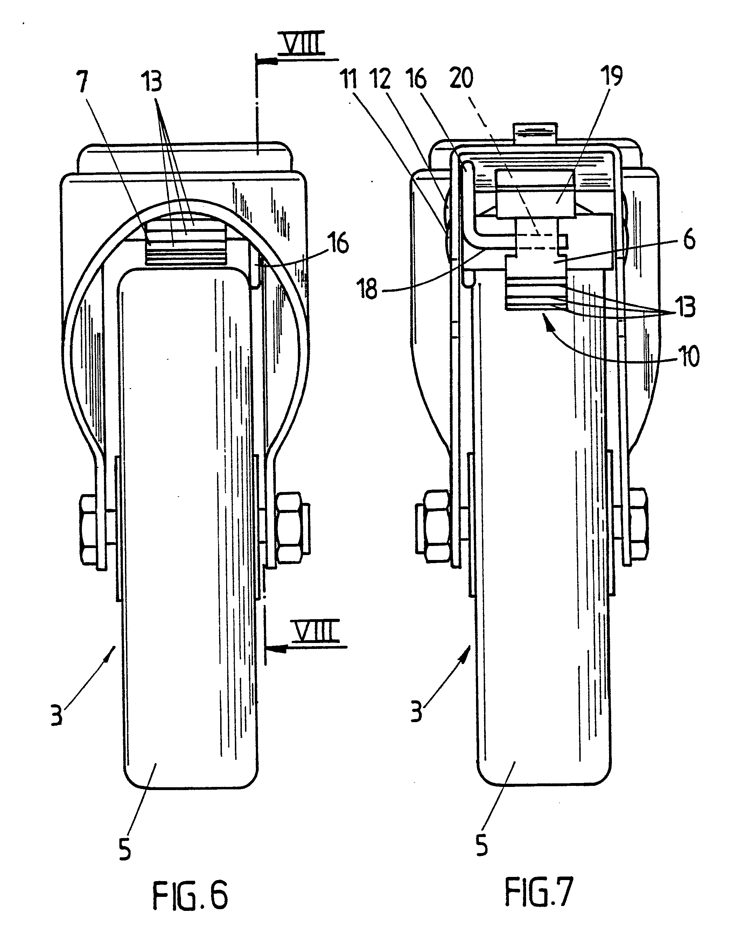

Fig. 6 eine Vorderansicht der Laufrolle gemäß Fig. 5;

Fig. 7 eine Rückansicht der Laufrolle gemäß Fig. 5;

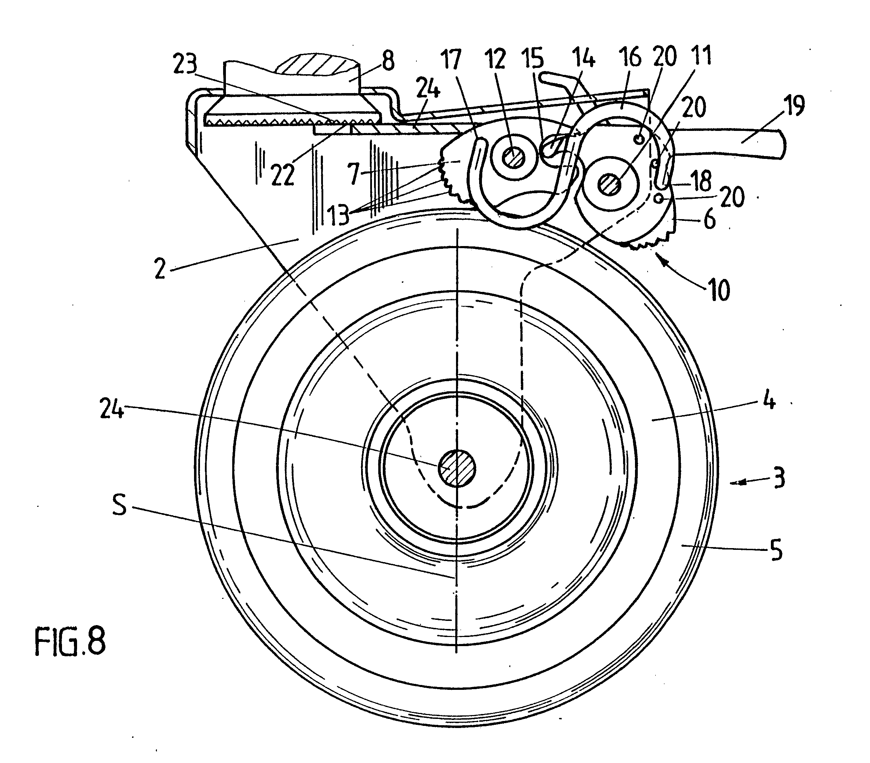

Fig. 8 einen Schnitt durch die Laufrolle gemäß Fig. 5 bzw. Fig. 6, geschnitten entlang der Linie VIII-VIII in Fig. 6; und

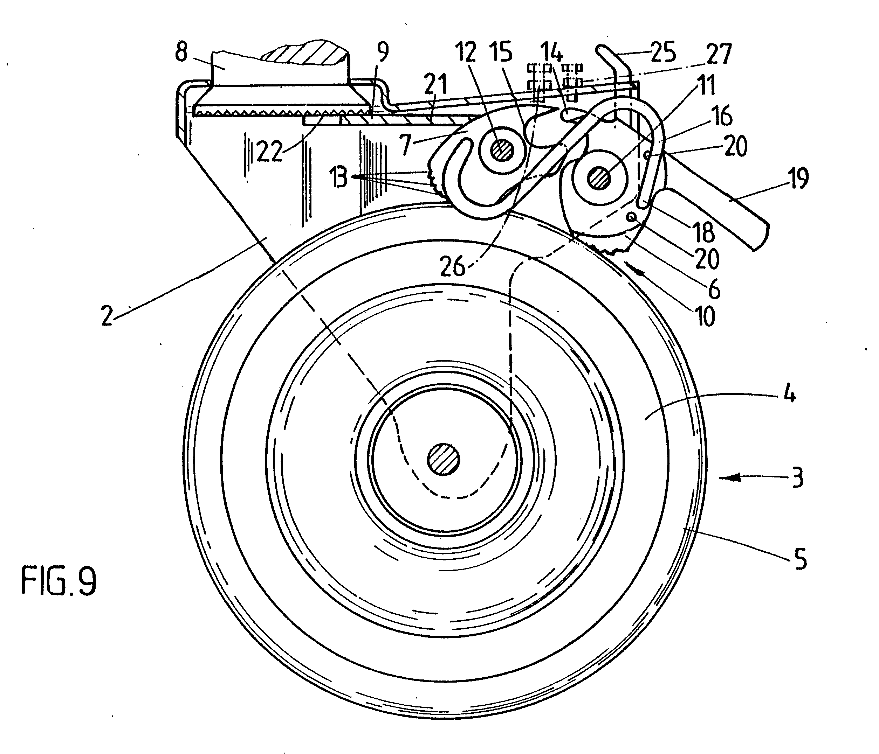

Fig. 9 eine Schnittdarstellung gemäß Fig. 8, mit Feststelleingriff der Feststellelemente.

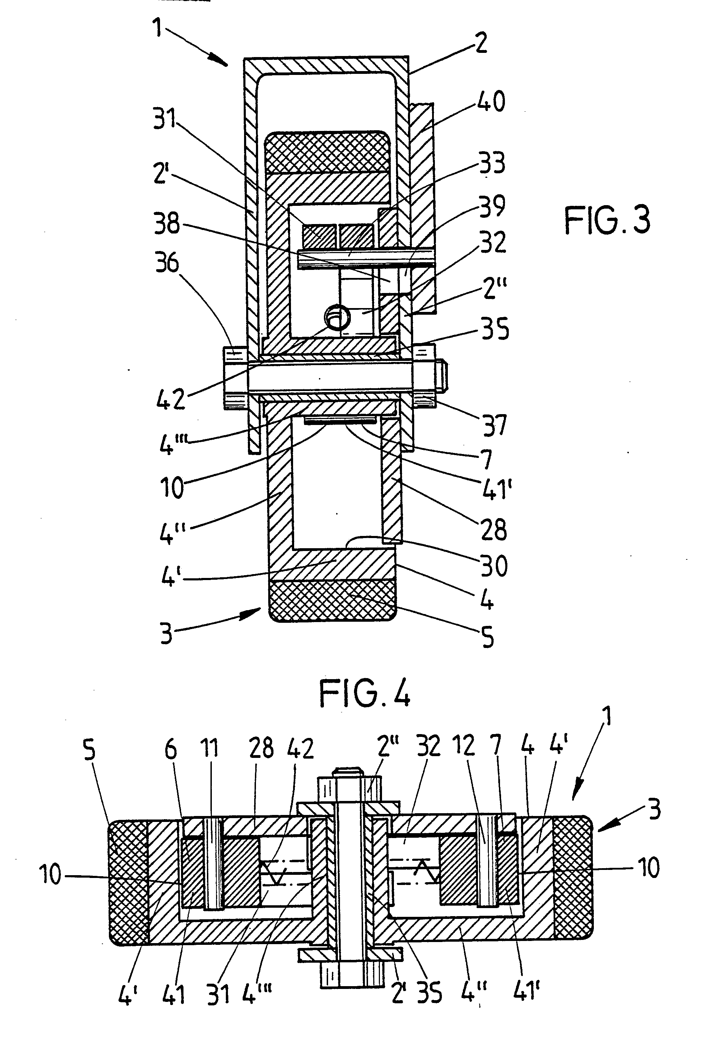

Dargestellt und beschrieben ist eine Laufrolle 1, mit Bezug zunächst zu Fig. 1, die ein in einer Laufrollengabel 2 (vgl. Fig. 3 und 4) gelagertes Laufrad 3 besitzt. Das Laufrad 3 weist einen Radkörper 4 auf, auf welchem eine Laufläche 5 angebracht ist. Die Laufläche 5 besteht insbesondere bei dem zweiten Ausführungsbeispiel (Fig. 5 - 9) aus einem vergleichsweise elastischen Material, derart, daß bei zunehmendem Feststelleingriff, wie nachstehend noch im einzelnen beschrieben, die Feststellbacken 6, 7 sich teilweise in die Laufläche eindrücken können.

Die Laufrolle (vgl. insbesondere Fig. 5 - 9) besitzt desweiteren eine Schwenkachse 8, welche durch eine Rastvorrichtung 9 mit der Laufrollengabel 2 schwenkverriegelbar ist. Eine solche Ausbildung zur Schwenkverriegelung ist in ihrem grundsätzlichen Aufbau beispielsweise in der eingangs zunächst genannten Druckschrift beschrieben.

Die Feststellbacken 6, 7 besitzen eine exzenterartig bzw. keilartig gekrümmte Eingriffsfläche 10. Diese Eingriffsfläche 10 ist in Bezug auf die Drehachsen 11, 12 der Feststellelemente 6, 7 auf einer gekrümmten Fläche mit zunehmendem Abstand zu diesen Drehachsen 11, 12 ausgebildet. Die Eingriffsflächen 10 können desweiteren mit einer Profilierung versehen sein (vgl. Fig. 5 - 9), die Spitzen 13 ausbildet.

Bei der Ausführungsform gemäß den Fig. 1 - 4 ist der Radkörper 4 im Querschnitt winkelförmig und einseitig offen ausgebildet, wobei ein Laufflächenstützsteg 4' im wesentlichen rechtwinklig zu einer Trägerscheibe 4'' verläuft. Der Radkörper 4 bildet des weiteren eine zentrale Nabe 4''' aus, zu welcher im übrigen der Stützsteg 4' konzentrisch verläuft. In dem durch die Nabe 4''' und dem Stützsteg 4' gebildeten Raum sind, gegenüberliegend, die Feststellbacken 6, 7 angeordnet. Die Laufrolle 1 ist an der offenen Seite des Radkörpers 4 darüber hinaus durch eine Trägerplatte 28 betrieblich verschlossen.

Die Achsen 11, 12 der Feststellbacken 6, 7 sind auf derselben waagerechten, durch einen Mittelpunkt 29 der Rolle gehenden Ebene E angeordnet. Die Eingriffsflächen 10 der Feststellbacken 6, 7 wirken bei dem Ausführungsbeispiel der Fig. 5 - 9 mit der konkav verlaufenden Innenfläche 30 des Stützringes 4' zusammen.

Die Feststellbacken 6, 7 besitzen des weiteren je einen Betätigungsarm 31, 32, an dem ein Betätigungsstift 33 angreift, zur Anhebung der Feststellbacken 6, 7 aus einer Eingriffsstellung in eine Freigabestellung. Bei der Anhebung drehen sich die Feststellbacken 6, 7 um die Achsen 11, 12, so daß die Eingriffsflächen 10 außer Eingriff mit der Innenfläche 30 des Stützsteges 4' geraten.

Die Betätigungsarme 31, 32 bilden bezüglich der Eingriffsbereich der Feststellbacken 6, 7 einen Hebelarm.

Die Betätigungsarme 31, 32 sind gekrümmt ausgeführt, so daß sie im hochgeschwenkten Zustand etwa entlang der Innenfläche 30 des Stützsteges 4' verlaufen.

Auf einer senkrechten Achse A, die gleichfalls durch den Mittelpunkt 29 der Laufrolle 1 geht, ist ein Betätigungsstift 33 vertikal bewegbar angeordnet.

Die Feststellbacken 6, 7 sind auch durch eine Feder 42 miteinander gekoppelt. Die Feder 42 greift jeweils an einem Betätigungsarm 31, 32 an und sucht die Feststellbacken 6, 7 in die Eingriffsstellung zu bewegen.

Zur Bewegung der Feststellbacken 6, 7 aus einer Eingriffsstellung (Fig. 2) in eine Freigabestellung (Fig. 1) wird der Betätigungsstift 33 nach oben bewegt. Über die Betätigungsarme 31, 32 werden die Feststellbacken 6, 7 um die Achse 11, 12 geschwenkt, so daß die Eingriffsflächen 10 aufgrund der Exzenterausführung außer Eingriff mit der Innenfläche 30 des Stützsteges 4' gelangen. Es ist ersichtlich, daß die Feststellbacken 6, 7 bezüglich ihres geometrischen Mittelpunktes 34, 35 auf den Achsen 11, 12 jeweils nach außen auf einer 45°-Linie versetzt gelagert sind.

Bei den im Ausführungsbeispiel dargestellten zwei Feststellbacken 6, 7 sind die Betätigungsarme, wie sich aus den Fig. 3 und 4 ergibt, nebeneinander liegend angeordnet. Der im wesentlichen zylindrisch ausgebildete (aber mit aus der Mitte versetzten Achse) Feststellgrundkörper 41, 41' jedoch ist im wesentlich über die ganze Breite des Stützsteges 4' erstreckend ausgebildet.

Wie aus Fig. 3 im einzelnen ersichtlich, ist bei dem hier zugrundeliegenden Ausführungsbeispiel im übrigen außenseitig auf dem Stützsteg 4' das Laufrad bzw. die Laufläche 5 angebracht. In der Nabe 4''' ist ein Distanzrohr 35 aufgenommen, welches die Schenkel 2', 2'' der Gabel 2 distanziert und innenseitig an diesen Schenkels 2', 2'' anliegt. Das Distanzrohr 35 ist gegen die Innenseiten der Schenkel 2', 2'' der Gabel 2 durch eine Schrauben-/Mutternhalterung (36, 37) verspannt. Die Schraube 36 bildet die geometrische Achse des Laufrades 3.

Die Trägerplatte 28 besitzt ein Langloch 38, das mit einem Langloch 39 in den Schenkel 2" in Überdeckung ist. Die Langlöcher 38 und 39 werden von dem Betätigungsstift 33 durchsetzt, der mit einer Betätigungsstange 40 verbunden ist, die beim Ausführungsbeispiel außenseitig auf dem Schenkel 2" der Gabel 2 aufliegend geführt ist.

Bei einer Drehung der Laufrolle 1 in Pfeilrichtung, wie in Fig. 1 angedeutet, kommt bei einem Absenken des Betätigungsstiftes 33 aus der Freigabestellung in die Eingriffsstellung bei beiden Feststellbacken 6, 7 die Eingriffsfläche 10 in Kontakt mit der Innenfläche 30 des Stützsteges 4'. Bezüglich der Eingriffsfläche 10 der Feststellbacke 6 kommt es zu einem selbsttätigen Einziehen und einer Bremswirkung aufgrund der Exzenterausbildung der Feststellbacke 6. Es ist aber auch eine Sicherung gegeben für den Fall, daß die Laufrolle 1 sich nach erfolgter Abbremsung in Gegenrichtung zu bewegen sucht. Dann wird ein feststellender Einzug zwischen der Eingriffsfläche 10 der Feststellbacke 7 und der Innenfläche 30 des Stützsteges 4' auftreten, bei gleichzeitiger Lösung der Feststellbacke 6.

Nachstehend ist des weiteren insbesondere auf das Ausführungsbeispiel gemäß den Fig. 5 - 9 Bezug genommen.

Die Eingriffsflächen 10 sind hierbei mit einer Profilierung versehen, die Spitzen 13 ausbildet. Bevorzugt sind die Spitzen 13 aus einem Zusammentreffen von beidseitig konvex gekrümmten Flächen gebildet. Das Laufrad 5 besitzt die erwähnte Elastizität zur Ermöglichung eines Eingriffs in der Bremsstellung, wie etwa in Fig. 9 dargestellt.

Die Feststellbacken 6, 7 sind um die Drehachsen 11,12 (vgl. beispielsweise Figuren 8, 9) gegensinnig verschwenkbar. Zum Feststelleingriff führt die gegensinnige Drehbewegung zwischen dem Laufrad 5 und der Feststellbakke 6 oder 7. Die jeweils andere Feststellbacke 6 oder 7 liegt bei einem Feststelleingriff der einen Feststellbakke jeweils lediglich aufgrund der Federkraft auf der Lauffläche 5 des Laufrades 3 auf.

Die Feststellbacken 6,7 sind mechanisch miteinander gekoppelt durch die an der Feststellbacke 6 ausgebildete Mitnehmernase 14, die in eine Eingriffsausnehmung 15 der Feststellbacke 7 eingreift. Im abgesenkten Zustand, wie in Fig. 9 dargestellt, sind die Mitnehmernase 14 und die Eingriffsausnehmung 15 außer Eingriff. Das jeweils nicht in Feststelleingriff befindliche Feststellelement 6 oder 7 wird somit bei einer weiteren Bewegung der anderen Feststellbacke nicht weiter zwangsläufig mitgeschwenkt.

Die Feststellbacken 6, 7 sind desweiteren durch eine Feder 16, die insgesamt S-förmig gekrümmt ist, gegeneinander vorgespannt. In der Nichteingriffsstellung, wie sie in Fig. 8 dargestellt ist, befinden sich die Verankerungsorte 17, 18 bezüglich der Drehachsen 11, 12 zueinander in einer Übertotpunktstellung. Diese wird durch Niederdrücken des Feststellelementes 6 mittels des Fußhebels 19 überwunden. Nach Überwindung der Übertotpunktstellung versucht das Federelement 16 die Feststellbakken 6,7 zueinander zu bewegen, wodurch es sie gleichzeitig um die Achsen 11,12 verschwenkt, derart, daß die Eingriffsflächen 10 mit der Laufrolle 5 in Eingriff kommen.

Wie insbesondere Fig. 7 zu entnehmen ist, ist das Federelement 16 an einem Endbereich des S-Bogens, zur Ausbildung des Verankerungsbereiches 18, etwa rechtwinklig abgebogen und in einer Bohrung 20 der Feststellbacke 6 durch Einstecken aufgenommen. Es kann darin gesichert sein. Eine gleiche Ausbildung ist bei der Feststellbacke 7 getroffen.

Desweiteren ist bei dem dargestellten Ausführungsbeispiel ein Feststelleingriff mit einer Schwenkverriegelung gekoppelt. Dies über das Federelement 21, welches eine Verzahnungsausbildung 22 besitzt, die mit einer entsprechenden Gegenverzahnung 23 zusammenwirkt.

In Fig. 9 sind, in schematischer Darstellung, Anschläge 26 und 27 für die Feststellbacken 6 und 7 dargestellt. Die Schwenkbewegung der Feststellbacken 6 und 7 kann durch die verstellbaren Anschläge 26 und 27 auf einen bestimmten Winkel begrenzt werden.

Wie der zeichnerischen Darstellung weiter zu entnehmen ist, sind beide Feststellelemente 6,7 auf einer Seite, bezüglich ihrer Schwenkachsen 11 bzw. 12, einer Senkrechten S durch die Radachse 24 angeordnet. Darüber hinaus kann auch der Fußhebel 19 als Bewegungsanschlag wirken, wenn er zur Absenkung auf die Lauffläche 5 trifft.

Von Bedeutung ist weiterhin, daß für den Halterungsbereich 18 des Federelementes 16 an der Feststellbacke 6 eine Vielzahl von Halterungsbohrungen 20 ausgebildet sind. Je nach Anwendungsfall kann hier eine Variation in einfacher Weise durchgeführt werden.

Im stumpfen Winkel zu dem Fußbetätigungshebel 19 ist ein Lösehebel 25 an dem Feststellelement 6 ausgebildet. Zum Lösen des Festsetzungseingriffes kann der Lösehebel 25 mit dem Fuß von oben beaufschlagt werden. Ein gebrauchstechnisch als unbefriedigend empfundenes Unterfassen des Hebels 19 mit einem Fuß, zum Lösen des Fußbetätigungshebels, ist nicht erforderlich.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein.

## Ansprüche

1. Laufrolle (1), insbesondere Lenkrolle, mit einem mit einer Lauffläche (5, 30) des Laufrades (3) zusammenwirkenden Feststellelement in Form einer sich aus der Drehbewegung des Laufrades (3) selbst einziehenden Feststellbacke (6, 7), dadurch gekennzeichnet, daß die Feststellbacke (6, 7) als zum Eingriff mit der Lauffläche (5, 30) verschwenkbar gelagertes Feststellelement ausgebildet ist und eine zu ihrer Drehachse (11, 12) exzenterartig gekrümmte Eingriffsfläche (10) besitzt.

2. Laufrolle, insbesondere nach Anspruch 1, dadurch gekennzeichnet, daß die Eingriffsfläche (10) der Feststellbacke (6, 7) mit einer konkav verlaufenden Innenfläche (30) der Laufrolle (1) zusammenwirkt.

3. Laufrolle, insbesondere nach einem oder mehreren der vorhergehenden Ansprüche, dadurch gekennzeichnet, daß die Feststellbacke (6, 7) einen Betätigungsarm (31, 32) besitzt, an dem ein Betätigungsstift (33) angreift, zur Anhebung der Feststellbacke (6, 7) aus einer Eingriffsstellung in eine Freigabestellung.

4. Laufrolle, insbesondere nach einem oder mehreren der vorhergehenden Ansprüche, dadurch gekennzeichnet, daß die Feststellbacke (6, 7) in einer feststehenden, an der Gabel (2) gehalterten Trägerplatte (28) gelagert ist.

5. Laufrolle, insbesondere nach einem oder mehreren der vorhergehenden Ansprüche, dadurch gekennzeichnet, daß bei einer Ausführungform mit zwei Feststellbacken (6, 7) die Betätigungsarme (31, 32) nebeneinander angeordnet sind.   ·

6. Laufrolle, insbesondere nach einem oder mehreren der vorhergehenden Ansprüche, dadurch gekennzeichnet, daß der Betätigungsstift (33) etwa im Bereich einer senkrechten Mittelachse (A) der Laufrolle (1) vertikal beweglich angeordnet ist.

7. Laufrolle, insbesondere nach einem oder mehreren der vorhergehenden Ansprüche, gekennzeichnet durch zwei für einen gegensinnigen Selbsteinzug gekoppelte Feststellbacken (6,7).

8. Laufrolle, insbesondere nach einem oder mehreren der vorhergehenden Ansprüche, dadurch gekennzeichnet, daß die zwei Feststellbacken (6, 7) durch ein Federelement (42) gekoppelt sind.

9. Laufrolle, insbesondere nach einem oder mehreren der vorhergehenden Ansprüche, dadurch gekennzeichnet, daß die Feststellbacke (6, 7) zum Eingriff mit der Lauffläche (5) verschwenkbar gelagert Feststellelement ausgebildet ist und eine zu ihrer Drehachse (11) exzenterartig gekrümmte Eingriffsfläche (10) besitzt.

10. Laufrolle, insbesondere nach einem oder mehreren der vorhergehenden Ansprüche, dadurch gekennzeichet, daß auf der Eingriffsfläche (10) eine Profilierung (13) ausgebildet ist.

11. Laufrolle, insbesondere nach einem oder mehreren der vorhergehenden Ansprüche, dadurch gekennzeichet, daß die Feststellbacke (6, 7) elastisch nachgebend ausgebildet ist.

12. Laufrolle, insbesondere nach einem oder mehreren der vorhergehenden Ansprüche, dadurch gekennzeichnet, daß die Feststellbacke (6, 7) anschlagbegrenzt bewegbar ist.

13. Laufrolle, insbesondere nach einem oder mehreren der vorhergehenden Ansprüche, dadurch gekennzeichnet, daß die Anschlagbegrenzung einstellbar ist.

14. Laufrolle, insbesondere nach einem oder mehreren der vorhergehenden Ansprüche, wobei die Feststellbacke mittels eines Fußhebels betätigbar ist, dadurch gekennzeichnet, daß die Feststellbacke (6, 7) durch die Bewegung des Fußhebels (19) auf die Lauffläche (5) abgesenkt wird.

15. Laufrolle, insbesondere nach einem oder mehreren der vorstehenden Ansprüche, dadurch gekennzeichnet, daß die eine Feststellbacke (6) eine Mitnehmernase (14) ausbildet, welche mit einer Eingriffsausnehmung (15) der anderen Feststellbacke (7) zu einem Anheben und Absenken derselben zusammenwirkt.

16. Laufrolle, insbesondere nach einem oder mehreren der vorstehenden Ansprüche, dadurch gekennzeichnet, daß die Mitnehmernase (14) und die Eingriffsausnehmung (15) im abgesenkten Zustand außer Eingriff sind.

17. Laufrolle, insbesondere nach einem oder mehreren der vorstehenden Ansprüche, dadurch gekennzeichnet, daß die Feststellbacken (6,7) durch ein an diesen jeweils außerhalb ihrer Drehachsen (11,12) angelenktes Federlement (16) gegeneinander vorgespannt sind.

18. Laufrolle, insbesondere nach einem oder mehreren der vorstehenden Ansprüche, dadurch gekennzeichnet, daß das Federelement (16) S-förmig gekrümmt ist.

19. Laufrolle, insbesondere nach einem oder mehreren der vorstehenden Ansprüche, dadurch gekennzeichnet, daß die Radfeststellung mit einer Schwenkverriegelung gekoppelt ist.

20. Laufrolle, insbesondere nach einem oder mehreren der vorstehenden Ansprüche, dadurch gekennzeichnet, daß beide Feststellbacken (6,7) auf einer Seite, seitlich des Radscheitels angeordnet sind.

FIG.1

FIG.2

FIG. 3

FIG. 4

FIG.5

EP 0 364 732 A1

VIII

7    13    11 12 16 20    19

16

18    6

13

10

FIG.6    FIG.7

3    3

5    5

VIII

FIG.8

FIG.9

Neu eingereicht / Nev
Nouvellement dép

EP 0 364 732 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 516 468 (HÄFELE) <br> * S. 6, ZZ. 23-25; S. 7, Z. 22 - S. 8, Z. 14. Fig. 3 * <br> --- | 1,2,3,6 | B 60 B 33/02 |
| Y | GB-A-2 110 780 (PLATT) <br> * S. 1, ZZ. 38-68. Fig. 1 * <br> --- | 1,2,3,6 | |
| A | GB-A-2 140 108 (PALMERSTON) <br> * S. 1, ZZ. 39-52; S. 2, ZZ. 18-49. Fig. 1-5 * <br> --- | 1,10 | |
| A | US-A-4 128 144 (VASSAR) <br> * Sp. 2, Z. 35 - Sp. 3, Z. 2. Fig. 1-4 * <br> --- | 1,4,5,6 ,7,8,17 ,20 | |
| A | US-A-3 529 700 (MARSHALL) <br> * Sp. 3, ZZ. 34-61. Fig. 1,2 * <br> ----- | 1,3 | |

| | | RECHERCHIERTE SACHGEBIETE (Int. Cl.5) |
|---|---|---|
| | | B 60 B <br> B 62 B <br> F 16 D |

Der vorliegende Recherchenbericht wurde für alle Patentansprüche erstellt

| Recherchenort | Abschlußdatum der Recherche | Prüfer |
|---|---|---|
| DEN HAAG | 16-01-1990 | AYITER I. |